Europäisches Patentamt

European Patent Office

Office européen des brevets

(11) Publication number: **0 043 693**
**B1**

## (12) EUROPEAN PATENT SPECIFICATION

(45) Date of publication of patent specification: **09.10.85**

(21) Application number: **81302982.4**

(22) Date of filing: **01.07.81**

(51) Int. Cl.⁴: **B 05 B 7/06,** B 05 B 7/16, A 23 N 17/00

(54) **Sprayer for molasses or the like.**

(30) Priority: **09.07.80 GB 8022403**

(43) Date of publication of application:
**13.01.82 Bulletin 82/02**

(45) Publication of the grant of the patent:
**09.10.85 Bulletin 85/41**

(84) Designated Contracting States:
**CH DE FR IT LI NL**

(56) References cited:
**GB-A-1 248 406**
**GB-A-1 315 157**
**GB-A-1 336 997**

(73) Proprietor: **THE ALBANY ENGINEERING COMPANY LIMITED**
**Church Road Lydney**
**Gloucestershire GL15 5EQ (GB)**

(72) Inventor: **Swaffield, Martyn George Douglas**
**Dean Cottage**
**Littledean Gloucestershire (GB)**

(74) Representative: **Fletcher Wilson, Thomas Arthur et al**
**T. Fletcher Wilson & Co. 10 Grosvenor House**
**Grosvenor Road**
**Coventry West Midlands, CV1 3FZ (GB)**

Courier Press, Leamington Spa, England.

EP 0 043 693 B1

## Description

This invention relates to sprayers for spraying molasses, e.g. for spraying molasses in finely divided form into cattle or other animal food.

The invention is concerned with such sprayers in which the molasses discharges from an outlet cup into a stream of a gaseous medium, e.g. air flowing past the outlet cup whereby the discharging molasses is broken up into finely divided form.

A sprayer of this general kind is set forth in the specification of GB—A—1,315,157 in which air under pressure is directed past a rotatable thrower cup to break up molasses discharging therefrom.

The object of this invention is to provide a sprayer of the abovementioned general kind having an improved spraying action for enabling an improved method of spraying to be carried out and which may be of simplified construction. Practical advantages in these and other respects will be apparent from the following disclosure.

British patent specification No. 1,248,406 discloses spraying apparatus for such material as urea-formaldehyde in order to pelletize it and in which the material discharging from a central outlet tube is subject to the action of air under pressure issuing as two concentric rings about the outlet tube and which are convergently directed towards the discharging material so as to pelletize it and reduce undesired eddy currents.

According to this invention a sprayer for molasses comprises support structure including a casing for receiving air under pressure, a discharge cup, passageway means for introducing molasses into the inner end of the cup for discharge of the molasses from the mouth of the cup and an annular nozzle member attached to the casing and providing an annular outlet opening about the cup mouth for directing air under pressure from the casing past the cup mouth in order to mix with and break up molasses discharging from the cup into a finely divided spray beyond the cup mouth; and is characterised in that a second annular outlet opening from a steam chest is provided by a second annular nozzle member about the first-mentioned nozzle member and annular opening for directing steam under pressure from the chest in order to further mix with and break up molasses discharging from the cup, the positioning of the first-mentioned annular outlet opening between the cup mouth and the second annular outlet opening enabling air to act as coolant air flow about the cup, between the latter and steam issuing from the second annular outlet opening.

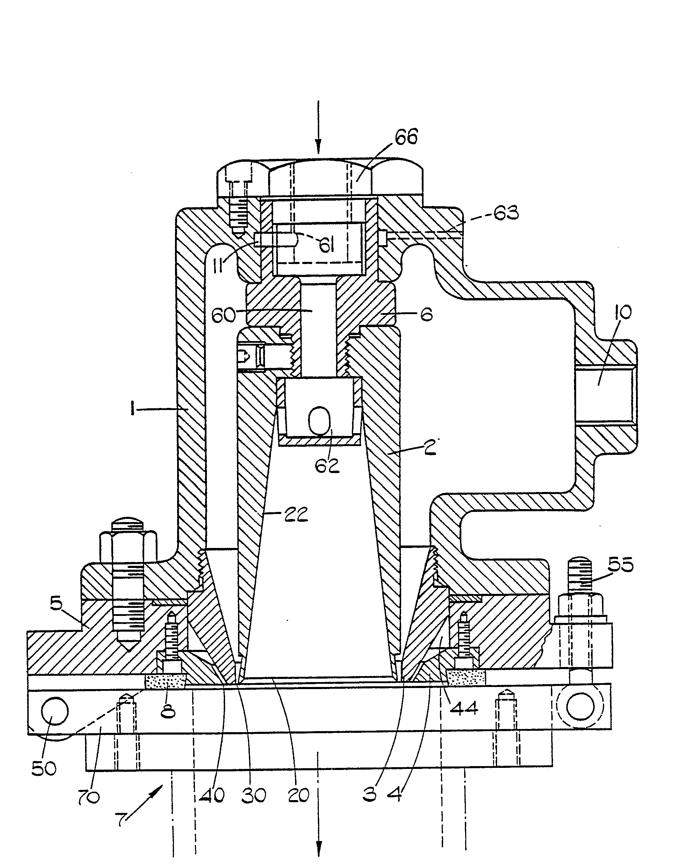

In practice the construction and arrangement of the sprayer is as follows, reference being had to the accompanying drawing which is an axial plane section of the sprayer.

For spraying molasses, the sprayer is shown intended for use in a vertical position in order to direct the spray of molasses in a downward direction, e.g. into cattle food.

The sprayer comprises an outer casing 1 containing a discharge cup 2 about a vertical axis, the interior wall 22 of the cup 2 being of taper or conical form diverging to the lower mouth 20 of the cup. The cup 2 may be rotatable about its axis but is preferably non-rotatable as shown for simplified construction of the sprayer.

The casing 1 contains at its lower part an annular nozzle 3 shown of conical form in an opposite manner to the cup 2 and concentrically surrounding the lower end of the latter with clearance at 30, a second concentric member or ring 4 of conical form being provided with clearance 40 about the conical nozzle 3 and shown carried by a base plate 5 on which the casing 1 is mounted.

In use molasses is introduced axially into the upper end of the cut 2 from a supply pump (not shown) via an axial passageway 60 in a support member 6 carrying the cup 2. The upper interior of the cup 2 contains a ported deflector 62 for directing the molasses against the interior conical wall 22 of the cup 2 whereby the molasses flows downwardly in a divergent direction and discharges in a similar manner from the mouth 20 of the cup 2. The support member 6 is shown mounted from the top of the casing 1 by a hollow bolt 66.

Air under pressure is admitted into the casing 1 at the inlet 10 so as to issue at 30 between the exterior of the mouth 20 of the cup 2 and the conical nozzle 3 in order to mix with molasses divergently discharging from the cup 2 and so break up the molasses into a fine spray.

In order to obtain a more effective breaking up of the molasses and in accordance with this invention steam is also introduced into the molasses discharging from the cup 2 from a steam chest 44, i.e. through the annular clearance 40 between the conical nozzle 3 and the ring 4. The steam chest 44 is supplied with steam in any suitable manner not shown.

The heating action of the steam renders the molasses less viscous so that it is more readily broken up into a finely divided spray by the combined action of the air and steam under pressure. The operation of the sprayer also has the advantage that intermixing of the steam with the molasses occurs beyond (i.e. outside) the sprayer thus directing heat away from the internal parts of the sprayer. Even so and whereas the introduction of the steam has the desired effect of breaking up the discharging molasses into a fine spray, the heat of the steam may still have the undesired effect of causing "caramelisation" of the molasses in the cup 2 thus hindering, or even preventing, discharge of molasses therefrom.

In the arrangement shown this is prevented to a considerable extent by the fact that the air under pressure issues at 30 immediately adjacent the cup 2, i.e. between the latter and the conical nozzle 3 so as to act as a coolant flow between the cup 2 and the heat due to steam in the chest 44 which, after a period of use would otherwise cause heating of the cup 2 up to caramelisation temperature (about 104°C).

In order to ensure that caramelisation does not occur or build up during a period of operation of the sprayer, the interior of the cup 2 is arranged to be purged with steam preferably at regular intervals, the purging steam being introduced via an inlet passageway 63 and annular chamber or gallery 11 in the upper part of the casing 1 and from thence via one or more radial passageways 61 into the supply passageway 60 for molasses to the cup 2. Steam introduced in this way thus flushes the whole interior of the cup 2, i.e. the wall 22 and also the ported deflector 62 and thus enables proper flow of the molasses to be maintained. Such steam purging may take place for a period of six seconds every fifteen minutes and its admission to the passageway 63 may be effected by a timer controlled solenoid operated valve. Here again these periods may be varied according to requirements whilst the steam for this purpose may be from the same source of supply as that to the steam chest 44 or tapped off the latter. Alternatively a separate steam supply at 63 may be employed.

The air inlet 10 to chamber 1 may include a metering orifice.

The base plate 5 on which the casing 1 is mounted together with the cup 2 and nozzles 3, 4 is shown hingedly mounted at 50 on a support plate or flange 70 of inlet passageway structure 7 to a cattle food or similar container, a readily releasable bolt connection 55 being provided to enable the complete sprayer 1 to be swung clear of the inlet passageway 7 for inspection or cleaning purposes. When the sprayer is in position of use fluidtight contact between the base plate 5 and support plate 70 is provided by an annular seal 8.

As well as having an effective spraying action the sprayer also conveniently provides means for directing steam down the inlet passageway 7 for required heating or cooking of cattle food and also for dust abatement.

## Claims

1. A sprayer for molasses comprising a support structure (1, 5, 50, 55) including a casing (1) for receiving air under pressure, a discharge cup (2), passageway means (6, 60) for introducing molasses into the inner end of the cup (2) for discharge of the molasses from the mouth (20) of the cup (2) and an annular nozzle member (3) attached to the casing (1) and providing an annular outlet opening (30) about the cup mouth (20) for directing air under pressure from the casing (1) past the cup mouth (20) in order to mix with and break up molasses discharging from the cup (2) into a finely divided spray beyond the cup mouth (20), characterised in that a second annular outlet opening (40) from a steam chest (44) is provided by a second annular nozzle member (4) about the firstmentioned nozzle member (3) and annular opening (30) for directing steam under pressure from the chest (44) in order to further mix with and break up molasses discharging from the cup (2), the positioning of the first-mentioned annular outlet opening (30) between the cup mouth (20) and second annular outlet opening (40) enabling air to act as coolant air flow about the cup (2), between the latter and steam issuing from the second annular outlet opening (40).

2. A sprayer for molasses according to claim 1 wherein inlet means (63, 11, 61) is provided for the periodic admission of steam under pressure into the inner end of the discharge cup (2) so as to purge the latter of molasses tending to adhere within the cup (2) e.g. due to caramelisation of molasses therein.

3. A sprayer for molasses according to claim 1 or 2 wherein the sprayer is mounted or mountable (5, 50, 55) in relation to passageway structure (7, 70) of or for a container for cattle food or the like so that the finely divided discharge of molasses together with the issuing air and steam is directed onto cattle food or the like in the container to introduce the molasses therein, and whereby the cattle food or the like is heated or cooked by the steam and the latter also effects abatement of dust otherwise tending to rise from the cattle food or the like.

4. A sprayer for molasses according to claim 3 wherein the sprayer is hingedly mounted (5, 50, 55) on the passageway structure (7, 70) for operative communication through the latter with a container for cattle food or the like or whereby the sprayer can be swung clear of the passageway structure (7, 70) e.g. for inspection or cleaning purposes.

## Revendications

1. Pulvérisateur de mélasses ou de matières analogues comprenant une structure de support incluant un boîtier ou carter (1) destiné à recevoir de l'air sous pression, une coupelle de décharge (2), des moyens de canaux (6, 60) adaptés pour introduire des mélasses à l'extrémité interne de la coupelle (2) afin de décharger les mélasses depuis l'embouchure (20) de cette dernière, et un élément de buse annulaire (3) fixé au boîtier (1) comportant une ouverture (30) de sortie annulaire, située autour de l'embouchure (20) de la coupelle et adaptée pour diriger de l'air sous pression, provenant du boîtier (1), à travers l'embouchure (20), en vue de se mélanger avec les mélasses déchargées de la coupelle et de les briser sous forme d'une pulvérisation finement divisée à la sortie de l'embouchure (20), ce pulvérisateur étant caractérisé par le fait qu'une seconde ouverture annulaire de sortie (40) débouchant d'un couloir à vapeur (44) est prévue formée par un second élément de buse annulaire (4) situé autour du premier élément de buse (3) et de l'ouverture annulaire (30), afin de diriger de la vapeur sous pression, provenant du couloir (44), sur les mélasses déchargées de la coupelle (2), en vue de se mélanger avec elles et de les briser, la position de la première ouverture de sortie (30), déchargeant de l'air, entre l'embouchure (20) de la coupelle et la seconde ouverture de sortie (40), déchargeant de la vapeur, permettant d'obtenir un courant d'air de refroidissement autour de la coupelle (2) et, plus précisément, entre cette dernière et la vapeur déchargée de la seconde ouverture annulaire de sortie (40).

2. Pulvérisateur de mélasses selon la revendication 1, caractérisé par le fait que des moyens d'admission (63, 11, 61) sont prévus pour une admission périodique de vapeur sous pression à l'extrémité interne de la coupelle de décharge (2), afin de purger cette dernière de mélasses tendant à adhérer en elle sous forme d'une caramélisation.

3. Pulvérisateur de mélasses selon l'une ou l'autre des revendications 1 ou 2, caractérisé par le fait qu'il est adapté pour pouvoir être monté ou fixé sur la structure de passage (7, 70) d'un récipient à nourriture pour bestiaux ou analogue, de façon que la pulvérisation finement divisée de mélasses, mélangée à de l'air et de la vapeur, soit dirigée sur la nourriture et pénètre dans celle-ci à l'intérieur du récipient et qu'ainsi cette nourriture soit réchauffée ou refroidie par la vapeur, cette dernière provoquant également des effets de diminution de la poussière provenant de la nourriture qui tendrait autrement à augmenter.

4. Pulvérisateur de mélasses selon la revendication 3, caractérisé par le fait qu'il est monté sur charnières (5, 50, 55) sur la structure de passage (7, 70), afin d'avoir une communication opérationnelle par cette dernière avec le récipient à nourriture pour bestiaux, ou afin qu'il puisse être dégagé et écarté de cette structure dans le but, par exemple, d'une inspection ou d'un nettoyage.

## Patentansprüche

1. Düse zum Zerstäuben von Melasse, mit einer Trägeranordnung (1, 5, 50, 55), die ein Gehäuse (1) zur Aufnahme von Druckluft besitzt, mit einem Auslaufbecher (2), mit Durchgangsmitteln (6, 60), zum Einleiten der Melasse in das innere Ende des Bechers (2) zum Abgeben der Melasse aus der Öffnung (20) des Bechers (2) und mit einem ringförmigen Düsenelement (3), das am Gehäuse (1) befestigt ist und das eine ringförmige Auslaßöffnung (30) um die Bechermündung (20) schafft, um Druckluft vom Gehäuse (1) an der Becheröffnung (20) vorbeizuleiten, so daß diese mit der Melasse gemischt und die Melasse, welche vom Becher (2) abgegeben wird, in einen fein verteilten Sprühstrahl jenseits der Becheröffnung (20) aufgetrennt wird, dadurch gekennzeichnet, daß von einem Dampfkasten (44) eine zweite ringförmige Auslaßöffnung (40) durch ein zweites ringförmiges Düsenelement (4) um das erstgenannte Düsenelement (3) und die ringförmige Öffnung (30) vorgesehen ist, um Dampf unter Druck von dem Kasten (44) aus zu zu leiten, so daß auch diese mit der Melasse gemischt und die Melasse, die vom Becher (2) weiter aufgetrennt wird, wobei die Positionierung der erstgenannten ringförmigen Auslaßöffnung (30) zwischen der Becheröffnung (20) und der zweiten ringförmigen Auslaßöffnung (40) es ermöglicht, daß Luft als kühlender Luftstrom um den Becher (2) zwischen dem letzteren und dem Dampf, der von der zweiten ringförmigen Auslaßöffnung (40) abgegeben wird, wirkt.

2. Düse zum Zerstäuben von Melasse nach Anspruch 1, dadurch gekennzeichnet, daß Einlaßmittel (63, 11, 61) für das periodische Einlassen von Dampf unter Druck in das innere Ende des Entladebechers (2) vorgesehen sind, um den letztere von Melasse, die am Becher (2) bspw. aufgrund einer Karamelisierung von Melasse darin anhaften kann, zu reinigen.

3. Düse zum Zerstäuben von Melasse nach Anspruch 1 oder 2, dadurch gekennzeichnet, daß die Düse in Verbindung mit einer Durchgangsanordnung (7, 70) an oder für einen Behälter für Viehfutter oder dgl. befestigt oder befestigbar (5, 50, 55) ist, so daß die fein verteilte Abgabe von Melasse zusammen mit der austretenden Luft und Dampf auf das Viehfutter oder dgl. in dem Container geleitet ist, um Melasse einzuführen, und wobei das Viehfutter oder dgl. durch den Dampf erwärmt oder gekocht wird und das letztere auch eine Verminderung von Staub bewirkt, der sonst vom Viehfutter oder dgl. aufsteigen kann.

4. Düse zum Zerstäuben von Melasse nach Anspruch 3, dadurch gekennzeichnet, daß die Düse an der Durchgangsanordnung (7, 70) zur betreiblichen Verbindung mit einem Behälter für Viehfutter oder dgl. durch die letztere schwenkbar befestigt (5, 50, 55) ist, oder wodurch die Düse von der Durchgangsanordnung (7, 70), bspw. für Untersuchungs- oder Reinigungszwecke weggeschwenkt werden kann.